# EUROPÄISCHE PATENTANMELDUNG

(11) **EP 1 096 282 A2**
(43) Veröffentlichungstag der Anmeldung: **02.05.2001**
(21) Anmeldenummer: 00121639.9
(22) Anmeldetag: 04.10.2000
(51) Int. Cl.: G02B 6/38

(54) **Optischer Steckverbinder**

(30) Priorität: 25.10.1999 DE 19951032
(71) Anmelder: Harting Automotive GmbH & Co. KG, 32339 Espelkamp (DE)
(72) Erfinder: Bruland, Alexander, Dipl.-Phys., 32369 Rahden (DE)

(57) **Zusammenfassung**

Für frei verlegbare Lichtwellenleiterverbindungen zur Übertragung optischer Signale wird ein lösbarer, hermaphroditisch ausgebildeter optischer Steckverbinder - bestehend aus zwei identischem Steckgehäusen (2) - vorgeschlagen, dessen in Faserendhülsen (9) fixierte Enden der Lichtwellenleiter (4) durch Druckfedern (10) auf einem gleichbleibenden, minimalen Abstand gehalten werden, wobei mögliche axiale Verschiebungen der Lichtwellenleiter, durch entsprechend ausgebildete Kanäle (6) innerhalb des Steckgehäuses ausgeglichen werden.

## Beschreibung

Die Erfindung betrifft einen optischen Steckverbinder für Lichtwellenleiter mit einem Steckgehäuse, wobei das Steckgehäuse eine Einführseite für Lichtwellenleiter und eine Steckseite aufweist und wobei mit Faserendhülsen versehenen Enden der Lichtwellenleiter zur Steckseite weisen.

Optische Steckverbinder werden zur mechanischen und optischen Verbindung von Lichtwellenleitern für eine störunanfällige Übertragung von analogen und/oder digitalen Signalen bei hohen Datenübertragungsgeschwindigkeiten in der Kommunikationstechnik benötigt.

Es ist bekannt, frei zu verlegende Lichtwellenleiter mit Stecker und Gegenstecker, bzw. mit einer aufwendigen Kombination aus Stecker ― Kupplung ― Stecker miteinander zu verbinden. Aus der US 5,883,995 ist eine LWL-Steckverbindung bekannt, die federnd gelagerte Lichtwellenleiter mit einer Verschlußkappe beschreibt, die in einer Kupplung verrastbar angeordnet sind.

Dieser Erfindung liegt die Aufgabe zugrunde, eine optische Kupplung der eingangs genannten Art dahingehend auszubilden, dass frei verlegte Lichtwellenleiterverbindungen bei kleinen mechanischen Abmessungen auch bei rauhen Umgebungsbedingungen optimale Koppeleigenschaften aufweisen und so einfach zu stecken sind wie elektrische Steckverbinder.

Diese Aufgabe wird dadurch gelöst, dass die Lichtwellenleiter im Bereich der Einführseite mittels Zugentlastungselementen gehalten sind, dass die Lichtwellenleiter mit den Faserendhülsen in eingeformte Kanäle im Steckgehäuse eingelegt sind, dass die Faserendhülsen in Steckrichtung versetzt, nebeneinander angeordnet sind, dass zumindest eine der Faserendhülsen mit einer Druckfeder versehen ist, wobei die Faserendhülse axial federnd gehalten ist, dass zumindest der Kanal, in dem der Lichtwellenleiter eingelegt ist, dessen Faserendhülse mit der Druckfeder versehen ist, eine Aufweitung aufweist, und dass das vordere Ende der in Steckrichtung zurückversetzt liegenden Faserendhülse in eine Führungsbohrung eintaucht und darin gehalten ist.

Die mit der Erfindung erzielten Vorteile bestehen insbesondere darin, daß mit der Ausführung des optischen Steckverbinders als hermaphroditischen Steckverbinder, bei dem Stecker und Gegenstecker identisch aufgebaut sind, eine einfache Handhabung, eine kostengünstige Produktion und eine vereinfachte Logistik ermöglicht wird.

Durch die Verwendung von entsprechend aus der DE 297 09 602 U1 bekannten Faserendhülsen für LWL-Polymerfasern, die für den Einsatz in optischen Steckverbindungen geeignet sind, wobei die Faserendhülse mit einer Druckfeder versehen ist, ist eine optimale optische Kopplung möglich, die eine minimale Koppeldämpfung bei der Signalübertragung gewährleistet. Der für den Andruck der Faserendhülsen erforderliche freie Federweg der Lichtwellenleiter wird durch entsprechend ausgebildete Kanäle im Gehäuseinneren des Steckverbinders gewährleistet. Dabei folgen die Lichtwellenleiter einer eventuellen Längenverschiebung durch die Druckfeder, mit einer entsprechenden Veränderung ihrer Krümmung bzw. ihrer Lage in dem geweiteten Kanal.

Ein Ausführungsbeispiel der Erfindung ist in der Zeichnung dargestellt und wird im folgenden näher erläutert. Es zeigen:
- Fig.1: einen Schnitt durch zwei gesteckte optische Steckverbinder,
- Fig.2: eine perspektivische Ansicht von zwei nicht gesteckten optischen Steckverbindern, und
- Fig.3: eine perspektivische Ansicht eines geöffneten optischen Steckverbinders.

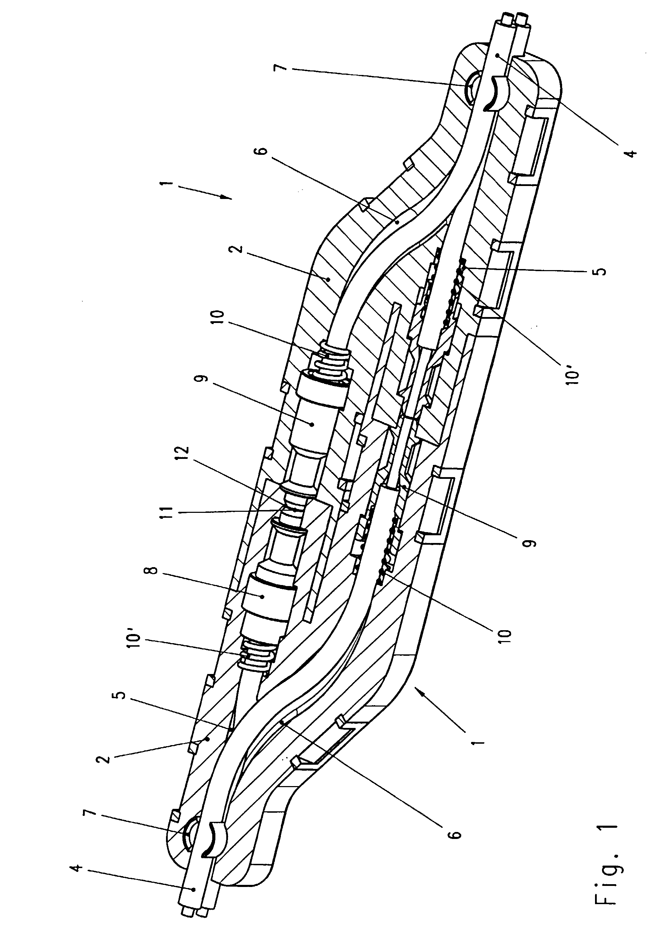

In der Fig.1 sind in einer perspektivischen Schnittansicht zwei gesteckte optische Steckverbinder 1 dargestellt.
Das Gehäuse des optischen Steckverbinders ist als sogenanntes hermaphroditisches Gehäuse ausgebildet, bei dem beide Steckgehäuse 2 als Stecker- und Gegenstecker identisch aufgebaut sind.
Dieser - hier z.b. zweikanalig ausgebildete - 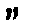 Duplex-Stecker" verbindet jeweils zwei Lichtwellenleiter 4, deren Faserenden in Faserendhülsen 8,9 fixiert sind. Dabei liegen die beiden zu verbindenden Lichtwellenleiter 4 mit ihren Faserendhülsen in zwei getrennten Kanälen 5,6, die von einem gemeinsamen Einführkanal abzweigen. Die Abzweigung ist so gestaltet, daß der Kanal 5 geradeaus und der zweite Kanal 6, zunächst abbiegend, leicht S-förmig und dann parallel zum ersten verläuft - ähnlich einer abzweigenden Weiche.
Wobei der geradeaus verlaufende Kanal 5 kürzer ausgeführt ist als der abzweigende Kanal 6.
Mindestens zwei der Faserendhülsen sind mit einer Druckfeder 10 versehen, die die Stirnflächen 11 der Lichtwellenleiter 4 ständig mit einem minimalen konstanten 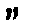 Abstand" gegeneinanderdrücken.
Dabei wird die mechanische Aufnahme und axiale Führung von jeweils zwei gegenüberliegenden Faserendhülsen durch die Bohrung 12 im jeweiligen Steckgehäuse 2 übernommen, die somit für eine exakte mechanische Führung verantwortlich ist, um eine optimale optische Kopplung zu erreichen.
Im Endbereich bzw. der Einführseite der Steckgehäuse 2 sind die Lichtwellenleiter 4 in einer Kabelzuentlastung 7 fixiert. Die Kabelzugentlastung ist als Einsatz in das jeweilige Steckgehäuse eingefügt und besteht z.b. aus einer rohrförmigen, geschlitzten Hülse, in die der Mantel der Lichtwellenleiter schneidend eingeklemmt wird.
Zwei der Lichtwellenleiter sind jeweils aufeinanderliegend geführt, so dass beide gleichzeitig durch die Kabelzugentlastung gehalten werden.
Um die freie Beweglichkeit der Lichtwellenleiter 4 um mindestens des Federweges einer Druckfeder zu gewährleisten, liegen die Lichtwellenleiter, deren Faserendhülsen 9 mit einer Druckfeder 10 versehen sind, in einem speziell ausgeformten Kanal 6.
Der Kanal 6 ist leicht S-förmig ausgestaltet, wobei der mittlere Bereich aufgeweitet ist, so dass dem Lichtwellenleiter 4 - durch eine Veränderung seiner Krümmung und somit seiner Lage im Kanal - eine Längenverschiebung mit dem Federweg der Druckfeder 10 ermöglicht wird.
Die in dieser Figur an den gegenüberliegenden Faserendhülsen ebenfalls eingelegten Druckfedern 10' stellen lediglich eine konstruktive Variante dar.

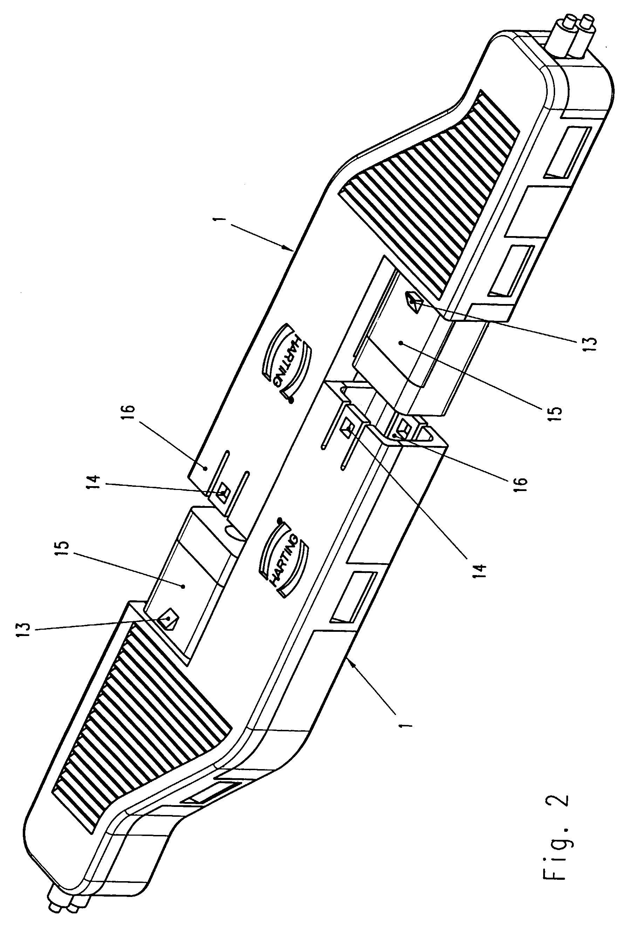

In der Fig. 2 sind zwei identische optische Steckverbinder im ungesteckten Zustand gezeigt, aus der deutlich die hermaphroditische Formgebung der beiden Gehäuse der Steckverbinder 1 zu ersehen ist.
Der als Stecker ausgebildete Bereich15 wird beim Zusammenstecken der beiden Steckverbinder 1 jeweils in den Einsteckbereich 16 eingefügt, wobei eine Verriegelung der beiden Steckverbinder mit den Rastmitteln 13 vorgenommen wird, die in Ausnehmungen 14 hörbar einrasten.

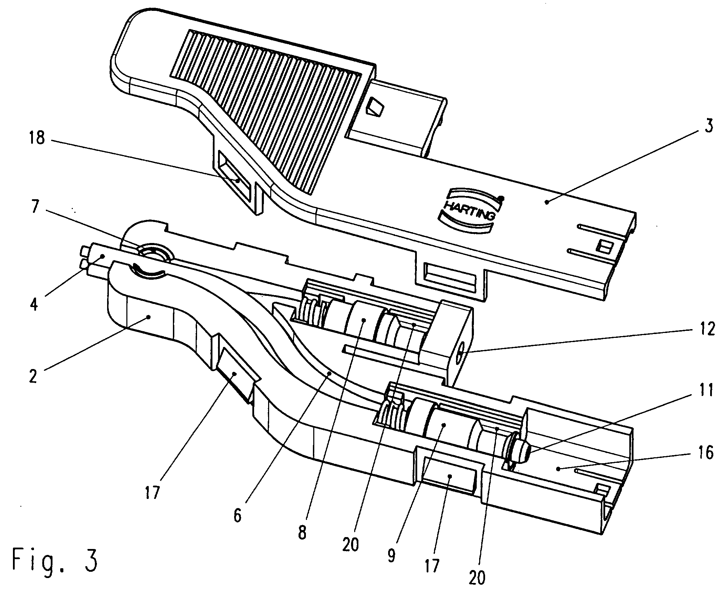

Die Fig. 3 zeigt einen optischen Steckverbinder 1 im geöffneten Zustand, wobei oberhalb vom Steckgehäuse 2 eine Abdeckung 3 getrennt dargestellt ist.
In dem Steckgehäuse 2 sind die Faserendhülsen 8, 9 mit den angecrimpten Lichtwellenleitern 4 in entsprechend geformte Hohlräume 20 eingelegt. Deutlich ist die vertiefte und somit geschützte Lage der Stirnflächen 11 der Lichtwellenleiter 4 zu erkennen. Während die Faserendhülse 8 vertieft in der Führungsbohrung 12 eingebettet ist, liegt die Faserendhülse 9 vertieft im kragenförmig ausgebildeten Einsteckbereich 16.

Dabei taucht die Faserendhülse 8 mit ihrem vorderen Ende und der Stirnfläche 11 in die Bohrung 12 ein, in die nach dem Zusammenstecken mit dem zweiten Steckgehäuse auch die konträre Faserendhülse mit ihrer Stirnfläche eintaucht, wodurch eine exakte axiale Positionierung der beiden Fasernendhülsen gewährleistet ist.
Im tangential abzweigenden Teil des Steckgehäuses 2 ist die zweite Faserendhülse 9 eingebettet, wobei in Steckrichtung vor der Stirnfläche der kragenförmige Einsteckbereich 16 vorragt, so dass ein ausreichender Berührungsschutz der Faserstirnflächen 11 gewährleistet ist.
Die Verrastung des Steckergehäuses 2 mit der Abdeckung 3 wird über die Rastelemente 17, die sich in entsprechende Ausnehmungen 18 einfügen, vorgenommen.

## Patentansprüche

1. Optischer Steckverbinder für Lichtwellenleiter mit einem Steckgehäuse, wobei das Steckgehäuse eine Einführseite für Lichtwellenleiter und eine Steckseite aufweist und wobei mit Faserendhülsen versehenen Enden der Lichtwellenleiter zur Steckseite weisen, dadurch gekennzeichnet,
dass die Lichtwellenleiter (4) im Bereich der Einführseite mittels Zugentlastungselementen (7) gehalten sind,
dass die Lichtwellenleiter (4) mit den Faserendhülsen (8,9) in eingeformte Kanäle (5,6) im Steckgehäuse (2) eingelegt sind,
dass die Faserendhülsen (8,9) in Steckrichtung versetzt, nebeneinander angeordnet sind,
dass zumindest eine der Faserendhülsen mit einer Druckfeder (10) versehen ist, wobei die Faserendhülse axial federnd gehalten ist,
dass zumindest der Kanal (6), in dem der Lichtwellenleiter (4) eingelegt ist, dessen Faserendhülse (9) mit der Druckfeder (10) versehen ist, eine Aufweitung aufweist, und
dass das vordere Ende der in Steckrichtung zurückversetzt liegenden Faserendhülse (8) in eine Führungsbohrung (12) eintaucht und darin gehalten ist.
